# EUROPEAN PATENT APPLICATION

(11) **EP 4 803 659 A1**
(43) Date of publication of application: **09.09.2026**
(21) Application number: 25161820.3
(22) Date of filing: 05.03.2025
(51) Int. Cl.: C25B 1/04, C25B 9/77, C25B 15/08, C25B 15/06

(54) **ELECTROLYSIS STACK CONFIGURATION HAVING INTERNAL STRAY CURRENT INHIBITION**

(71) Applicant: Siemens Energy Global GmbH & Co. KG, 81739 München (DE)
(72) Inventor: Hanebuth, Marc, 90482 Nürnberg (DE); Do, Nga Thi Quynh, 91056 Erlangen (DE)

(57) **Abstract**

A gas conduit (58) is constructed and arranged to feed a gas (42) into an active area (50) of an electrolysis cell (12) within a stack (14) in sufficient quantity to function as an electrical insulator and reduce an electric current at an entry (52) of the active area (50) and thereby more closely balance the current at the entry (52) of the active area (50) with the current at an exit (54) of the active area (50). Also, an electrolysis-mixed stack configuration (10) is provided having a plurality of electrolytic cells (12) forming an electrolysis stack (14), a pump (20) in fluid communication with a hydrogen-side phase separator (22) in fluid communication with a heat exchanger (24) in fluid communication with a hydrogen-side recycle blower (26); where the electrolysis stack (14) is shared with an oxygen-side (16) having a pump (20) in fluid communication with an oxygen-side phase separator (32) in fluid communication with the heat exchanger (24) in fluid communication with the oxygen-side recycle blower (36); wherein hydrogen (42) is generated.

## Description

### BACKGROUND

### 1. Field

The present invention relates in general to electrolysis stack configuration having internal stray current inhibition, and more specifically to an electrolysis-mixed stack configuration having internal stray current inhibition utilizing a two-phase fluid flow.

### 2. Description of the Related Art

Electrolysis is a chemical reaction where an electric current causes a substance to decompose into its basic components. In the case of water electrolysis, an electric current is used to split water molecules into hydrogen and oxygen gases. In more detail, the current is applied across electrolytes, whereby the anode attracts the negatively charged hydroxide ions (OH⁻) thereby releasing oxygen gas (O₂), and the cathode attracts the positively charged hydrogen ions (H⁺) thereby releasing hydrogen gas (H₂). The basic components of an electrolysis reaction are thus an electrolytic cell having two electrodes (a cathode with negative charge and an anode with positive charge) opposing an electrolyte membrane. An electrolysis stack configuration typically contains a plurality of electrolytic cells arranged as a stack, as well as, depending on the particular electrolysis application, various other optional components such as pumps, separators, exchangers and other related components such as storage tanks and power supplies to power, deliver, receive, redirect, oxidize, reduce, phase change, temperate, alter, modify or otherwise act on the substance(s) undergoing electrolysis.

A stack configuration is advantageous because it reduces electric losses inside the electrical connections of the stack since the same electrical power can be achieved with lower electrical currents, while the stack voltage increases. However, a stack of multiple cells means that an aqueous fluid has contact to cells at different electrical potentials. As an order of magnitude, the number of cells per stack may reach for example 100 and, in consequence, the potential difference between these cells can be higher than 100 V and even higher than 200 V. As a result, ionic stray currents flow between different cells within the stack; hereinafter termed 'internal stray currents'. The internal stray currents may be limited by the specific conductivity of the aqueous electrolyte, which is desirously high for certain electrolysis technologies to attain higher cell efficiencies.

However, internal stray currents reduce the Faradaic efficiency of the stack, such that a part of the current through the stack is not utilized for the formation of the desired product. Instead, the energy is converted into undesired off-heat. Moreover, since the internal stray currents are ionic, there will be electrochemical reactions. One such electrochemical reaction is cathodic, which can lead to a local production of hydrogen, or a decreased production rate of the anodic product, e. g. O₂ or Cl₂. Potentially more damaging is a second electrochemical reaction, which is anodic, which can lead to a reduced production rate of the cathodic product, like hydrogen. However, since the voltages are quite high, anodic corrosion of metal parts will likely occur if no measures against internal stray currents are taken.

A known electrolysis stack configuration to inhibit internal stray currents involves utilizing external manifolds. Here, every cell has its own tubing system for the connection of the aqueous electrolyte. However, external manifold tubes are complex and expensive. For example, external manifold tubes have small diameters, are relatively long, need to be interconnected, and typically coiled to minimize space requirements. Thus, the effort to manufacture, install, maintain and repair external manifold tubes is quite high. Moreover, tubes for pressurized fluids are even more expensive. Therefore, external manifolds are seldomly used for pressurized electrolysis.

Another known electrolysis stack configuration to inhibit internal stray currents involves meandering internal manifolds. Internal manifolds eliminate the need for connections for each cell, thus eliminating external manifold tubing. That is, the internal manifold is realized by larger holes through the cell frames, acting like hidden distribution pipes through the whole stack. From these internal manifolds the aqueous electrolyte is distributed to the active areas of each cell. However, the internal manifolds do nothing to inhibit internal stray currents. But since resistance to ionic stray currents is increased over cell channel length, significantly lengthening the cell channels can inhibit internal stray currents when utilizing internal manifolds. Thus, constructing the internal manifolds in an elongated meandering design for each cell can inhibit internal stray currents. However, the specific conductivities of the aqueous electrolyte are typically too high to effectively reduce the internal stray currents to an acceptable level without sacrificing a large part of the cell frame area. Moreover, a meandering internal manifold design also results in significant additional costs and design complexity.

There is thus a need for an electrolysis stack configuration having effective stray current inhibition.

An electrolyzer is a device that uses an electrolysis stack configuration to split water or other substances into basic constituents, typical chemical elements. Electrolyzers have many beneficial aspects. One aspect involves clean generation of the reaction products hydrogen and oxygen, that then can be used to feed (directly or after storage) any of a variety of industrial, commercial, individual or common inputs such as factories, gas turbines, equipment, vehicles, etc., as well as repositories and other storage mediums, as well as ambient or polluted air. Another aspect involves integration of electrolyzers with renewable energy sources such as solar, wind, geothermal, etc., whereby the renewable energy sources provide the requisite electricity to selectively power the electroyzers and vice-versa. Still another aspect involves combinations of the above aspects. There is thus a further need for an electrolyzer comprising an electrolysis-mixed stack configuration having stray current inhibition.

### SUMMARY

In an aspect of the subject matter of the invention, a recycle blower 26 is constructed and arranged to feed a gas 42 into an active area 50 of an electrolysis cell 12 within an electrolysis-mixed stack 14 in sufficient quantity to function as an electrical insulator and reduce an electric current at an entry 52 of the active area 50 and thereby more closely balance the current at the entry 52 of the active area 50 with the current at an exit 54 of the active area 50.

In another aspect of the subject matter of the invention, an electrolysis cell 12 having a recycle blower 26 is provided, comprising an active area 50; a gas conduit 58 to deliver hydrogen gas 42 received from the recycle blower 26 to the active area 50; an aqueous solution conduit 56 to deliver aqueous solution 40 to the active area 50; a two-phase fluid outlet conduit 60 to remove the hydrogen gas 42 and the aqueous solution 40 from the active area 50; a gas conduit 64 to deliver oxygen gas 46 received from a recycle blower 36 to the active area 50; an aqueous solution conduit 62 to deliver the aqueous solution 40 to the active area 50 and an oxygen-side 18 two-phase fluid outlet conduit 66 to remove the oxygen gas 46 and the aqueous solution 40 from the active area.

In another aspect of the subject matter of the invention, an electrolysis-mixed stack configuration 10 is provided, having a hydrogen-side 16 comprising the electrolysis stack 14, a pump 20 in fluid communication with the phase separator 22 in fluid communication with a heat exchanger 24 in fluid communication with the recycle blower 26; and an oxygen-side 18 comprising the electrolysis stack 14 shared with the hydrogen-side 16, the pump 20 in fluid communication with an oxygen-side phase separator 32 in fluid communication with the heat exchanger 24 in fluid communication with the oxygen-side recycle blower 36; wherein hydrogen 42 is generated from the hydrogen-side 16.

These and other features, aspects and advantages of the present invention will become better understood with reference to the following drawings, description and claims.

### BRIEF DESCRIPTION OF THE DRAWINGS

The invention is shown in more detail by help of figures. The figures show preferred configurations and do not limit the scope of the invention.
FIG 1 is a schematic of an electrolysis-mixed stack configuration having stray current inhibition in accordance with an exemplary embodiment of the subject matter.
FIG 2 is a detail view of an electrolysis cell of the stack configuration of FIG 1 in accordance with an exemplary embodiment of the subject matter.

### DETAILED DESCRIPTION

In the following detailed description of the subject matter and of the present invention, reference is made to the accompanying drawings that form a part hereof, and in which is shown by way of illustration, and not by way of limitation, specific aspects and embodiments by which the invention may be practiced. It is to be understood that other aspects and embodiments may be utilized and that changes may be made without departing from the spirit and scope of the subject matter or the present invention.

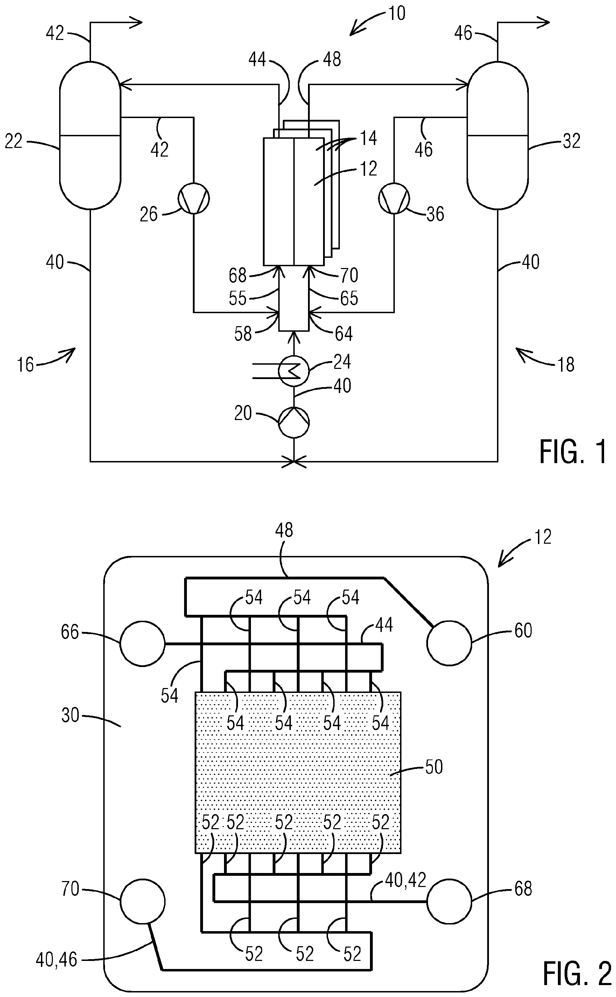

Referring to Figures 1 and 2, in an aspect of the subject matter of the invention, a phenomenon has been surprisingly and unexpectantly discovered that internal stray currents within an electrolysis stack configuration 10 tend to be appreciably greater for a fluid entering a cell 12 stack 14 than the current exiting the cell 12 stack 14. As an order of magnitude, the number of cells 12 per stack 14 may reach for example 100 and, in consequence, the potential difference between these cells 12 can be higher than 100 V and even higher than 200 V.

In another aspect of the subject matter of the invention, it has been exceptionally understood that an effective way to inhibit this internal stray current phenomenon is to introduce a gas 42, 46 along with an aqueous solution 40 to form a two-phase fluid (gas and liquid) that flows into the cell 12 stack 14. The gas 42, 46 functions as an electrical insulator to help reduce the current at the cell 12 stack 14 entry, and thereby help more closely balance the current at the cell 12 stack 14 entry and exit, which in turn inhibits the internal stray current phenomenon.

In yet another aspect of the subject matter of the invention, an electrolysis-mixed stack configuration 10 is provided with a gas conduit 58, 64 that cooperates with an aqueous solution conduit 56, 62 to form a two-phase fluid (gas and liquid) that flows into the cell 12 stack 14, and thereby helps more closely balance the current at the cell 12 stack 14 entry and exit and thus inhibit internal stray currents. Various two-phase flow arrangements into the cell 12 stack 14 consisting of a gaseous part and a liquid part may be utilized.

In still another aspect of the subject matter of the invention, an electrolyzer having an electrolysis stack configuration 10 that inhibits internal stray currents is provided.

Referring now to Figure 1, an electrolysis stack configuration 10 having stray current inhibition is provided. The electrolysis stack configuration 10 comprises a plurality of electrolytic cells 12 that collectively form an electrolysis stack 14. The electrolysis stack configuration shown is an exemplary electrolysis-mixed stack configuration 10 illustrated as a two fluid loop configuration with a hydrogen-side 16 and an oxygen-side 18. The hydrogen-side 16 comprises the cells 12 that collectively form the stack 14, a shared pump 20, a hydrogen-side phase separator 22, a shared heat exchanger 24, and a hydrogen-side recycle blower 26. The oxygen-side 18 comprises the cells 12 and stack 14 (shared with the hydrogen-side 16), a shared pump 20 (shared with the hydrogen-side 16), an oxygen-side phase separator 32, a shared heat exchanger 24 (shared with the hydrogen-side 16), and an oxygen-side recycle blower 36.

In operation, on the hydrogen-side 16 of the electrolysis-mixed stack configuration 10, a pump 20 advances an aqueous solution (e.g. a hydroxide such as 5 - 35% KOH or NaOH) 40 into a heat exchanger 24 where the aqueous solution 40 is temperated such as off-heat of the electrolysis withdrawn. The aqueous solution 40 branches into a hydrogen-side aqueous solution conduit 56 and oxygen-side aqueous solution conduit 62. Hydrogen gas 42 is introduced to the hydrogen-side aqueous solution conduit 56 via a gas conduit 58 to form a two-phase fluid flow 68 (discussed in greater detail below) that enters the electrolysis cell 12 stack 14, wherein parts of the aqueous solution 40 are reduced to a gaseous component (e.g. hydrogen, H₂) 42 via electrolysis. Thus, a two-phase fluid 44 exits the hydrogen-side 16 of the cell 12 stack 14 comprising the gaseous hydrogen 42 and the remaining unreduced liquid phase aqueous solution 40. A hydrogen-side phase separator 22 separates the two-phase fluid 44 into two single-phase fluids: gaseous hydrogen 42 and liquid phase aqueous solution (e.g. KOH containing K⁺ and OH) 40. The gaseous hydrogen 42, often a desired electrolysis product, is made use of or stored or otherwise employed. The liquid phase aqueous solution 40 advances to the pump 20, thereby completing the hydrogen-side 16 of the exemplary electrolysis-mixed stack configuration 10. A hydrogen-side 16 recycle blower 26 is arranged on the hydrogen-side 16 of the electrolysis-mixed stack configuration 10 in fluid connection with the phase separator 22 and the electrolysis cell 12 stack 14 to provide gaseous hydrogen 42 to the electrolysis cell 12 stack 14 and to feed itself 26, as discussed in more detail below. As will be understood by those skilled in the art, the recycle blower 26 may be alternatively arranged in other suitable fluid communication ways to provide gaseous hydrogen 42 (or other hydrogen-comprising gas) to the electrolysis cell 12 stack 14.

In operation, on the oxygen-side 18 of the electrolysis-mixed stack configuration 10, a pump 20 advances an aqueous solution (e.g. a hydroxide such as 5 - 35% KOH or NaOH) 40 into a heat exchanger 24 where the aqueous solution 40 is temperated such as cooled. The aqueous solution 40 branches into a hydrogen-side aqueous solution conduit 56 and oxygen-side aqueous solution conduit 62. Oxygen gas 46 is introduced to the oxygen-side aqueous solution conduit 62 via a gas conduit 64 to form a two-phase fluid flow 70 (discussed in greater detail below) that enters the electrolysis cell 12 stack 14, wherein parts of the aqueous solution 40 are oxidized to a gaseous component (e.g. oxygen, O₂) 46 via electrolysis. Thus, a two-phase fluid 48 exits the oxygen-side 18 of cell 12 stack 14 comprising the gaseous oxygen 46 and the remaining unoxidized liquid phase aqueous solution 40. An oxygen-side phase separator 32 separates the two-phase fluid 48 into two single-phase fluids: gaseous oxygen 46 and liquid phase aqueous solution (e.g. KOH containing K+ and OH)-) 40. The gaseous oxygen 46 may be discarded or otherwise utilized. The liquid phase aqueous solution 40 advances to pump 20, thereby completing the oxygen-side 18 of the exemplary electrolysis-mixed stack configuration 10. An oxygen-side 18 recycle blower 36 is arranged on the oxygen-side 18 of the electrolysis-mixed stack configuration 10 in fluid connection with the phase separator 32 and the electrolysis cell 12 stack 14 to provide gaseous oxygen 46 to the electrolysis cell 12 stack 14 and to feed itself 36, as discussed in more detail below. As will be understood by those skilled in the art, the recycle blower 36 may be alternatively arranged in other suitable fluid communication ways to provide gaseous oxygen 46 (or other oxygen-comprising gas) to the electrolysis cell 12 stack 14.

As illustrated in Figure 2, a detail view of an electrolysis cell 12 within the electrolysis-mixed stack configuration 10 is provided. The illustrated exemplary electrolysis cell 12 comprises: (1) an active area 50 having a fluid entry 52 and a fluid exit 54, (2) a hydrogen-side aqueous solution conduit 56 to deliver the aqueous solution 40 to the active area 50, (3) a hydrogen-side gas conduit 58 to deliver the hydrogen gas 42 to the active area 50, (4) a hydrogen-side two-phase fluid outlet conduit 60 to remove the gaseous hydrogen 42 and the liquid phase aqueous solution 40 from the active area 50, (5) an oxygen-side aqueous solution conduit 62 to deliver the aqueous solution 40 to the active area 50, (6) an oxygen-side gas conduit 64 to deliver the oxygen gas 46 to the active area 50, (7) an oxygen-side two-phase fluid outlet conduit 66 to remove the gaseous oxygen 46 and the liquid phase aqueous solution 40 from the active area 50.

While the above exemplary embodiment illustrates a two-phase fluid flow configuration 68, 70 wherein a gas (hydrogen 42 or oxygen 46) flow is introduced into a liquid phase (aqueous solution 40) flow prior to entry 52 into the active area 50 of a cell 12, other suitable two-phase fluid flow configurations consisting of a gaseous part and a liquid part may be utilized. For example, the liquid 40 flow may be introduced or evenly merged into the gas 42, 46 flow prior to entry 52 into the active area 50 of a cell 12. For another example, the liquid 40 flow and the gas 42, 46 flow may independently enter into the active area 50 of a cell 12. For another example, one flow may be smaller, slower, more turbulent (or any combination thereof) than the other flow. For another example, bubbles of gas 42, 46 may be introduced into the liquid 40. For another example, droplets of liquid 40 may be introduced into the gas 42, 46. For another example, an intermediary gas or phase that subsequently forms or comprises gaseous hydrogen 42 or oxygen 46 may be used. For another example, a two-phase fluid 'slug flow' having alternating portions or regions of gas 42, 46 and liquid 40 may be used. Slug flow provides an additional advantage because the isolated disconnected gas 42, 46 flow functions as an electrical isolator, thereby inhibiting stray currents.

As discussed above, a contiguous connected liquid flow is not as advantageous as a gaseous flow or a disconnected slug flow because a contiguous connected liquid flow does not inhibit internal stray currents inside a cell 12 as effectively as gaseous or disconnected slug flow. It is beneficial that a gaseous flow or a gaseous region of a two-phase fluid flow function as an insulator, thereby suppressing the ionic current through a cell 12 and, therefore, between the entry 52 and exit 54 of the cell 12 and of the stack 14. However, although not as advantageous as a gaseous flow or a slug flow, a contiguous connected liquid flow may still be utilized.

The relative advantageousness of slug flow depends in part on the void fraction of the two-phase fluid flow, with a higher void fraction being generally favorable. However, since a liquid flow is also needed as feed for the electrolysis reaction and for cooling, the void fraction should not exceed too high a value. For purposes of an electrolysis-mixed stack configuration 10 application that inhibits internal stray currents, as well as for purposes of an electrolyzer application that inhibits internal stray currents, the void fraction of the two-phase flow advantageously is (but is not required to be) in the range of 10 % to 90 % (gas vol/ liquid vol), and more advantageously is (but is not required to be) in the range of 30 % to 70 % (gas vol / liquid vol).

To decrease ionic current through a liquid film, preventing wetting the surface of the cell channels, it is beneficial to choose a hydrophobic material for the cell 12 frames. This may also be applicable to bipolar plates, or other parts of the cell 12, if there is contact to the two-phase fluid inside the cell 12.

Additional gas feeds can be realized by additional recycle blowers 26, 36 which transport the gas 42, 46 from the phase separator 22, 32 into the cell 12 stack 14. For some types of electrolysis configurations and electrolyzers, an additional recycle blower 26, 36 and gas conduit 58, 64 may be further advantageous if there is a liquid feed on another side of the stack 14. For configurations with no liquid feed, like 'dry cathode' or 'dry anode', an additional recycle blower 26, 36 may be advantageous on that side.

Electrolysis cell 12 stack 14 configurations other than the exemplarily illustrated electrolysis-mixed stack configuration 10 may be used alternatively or in combination with the exemplarily illustrated electrolysis-mixed stack configuration 10. For purposes herein, an electrolysis-mixed stack configuration 10 means that the electrolysis configuration has at least one component configured as a hydrogen-side 16 component and further configured to be shared with or have a mixed use as an oxygen-side 18 component. In the exemplarily illustrated electrolysis-mixed stack configuration 10, the pump 20 and heat exchanger 24 are each configured as a shared or mixed use hydrogen-side 16 and oxygen-side 18 component. For example, an electrolysis-separated stack configuration may be used, wherein at least one component (excluding the phase separator 22, 32 and the recycle blower 26, 36) configured as a hydrogen-side 16 component is also configured as a separate component on the oxygen-side 18 of the stack configuration, e.g. pump, heat exchanger, etc.

Electrolyzers, such as those commercially available from a variety of sources, are suitable for use with the inventive electrolysis-mixed stack configuration 10 having internal stray current inhibition.

While specific exemplary embodiments and illustrations have been described in detail, those with ordinary skill in the art will appreciate that various modifications and alternative to those details could be developed in light of the overall teachings of the disclosure. Accordingly, the particular arrangements disclosed are meant to be illustrative only and not limiting as to the scope of the subject matter, which is to be given the full breadth of the appended claims, and any and all equivalents thereof.

## Claims

1. A recycle blower (26) constructed and arranged to feed a gas (42) into an active area (50) of an electrolysis cell (12) within an electrolysis-mixed stack (14) in sufficient quantity to function as an electrical insulator and reduce an electric current at an entry (52) of the active area (50) and thereby more closely balance the current at the entry (52) of the active area (50) with the current at an exit (54) of the active area (50).

2. The recycle blower (26) of claim 1, wherein the sufficient quantity of gas (42) to function as the electrical insulator is 10 % - 90 % gas volume relative to a liquid volume of an aqueous solution (40) also entering the active area (50) of the electrolysis cell (12).

3. The recycle blower (26) of claim 2, wherein the sufficient quantity of gas (42) is 30 % to 70 % (gas vol / liquid vol).

4. A gas conduit (58) in fluid communication with the recycle blower (26) of claim 1, the gas conduit (58) constructed and arranged to receive hydrogen gas (42) from the recycle blower (26) and deliver the hydrogen gas (42) to the active area (50) of the cell (12).

5. An electrolysis cell (12) having the recycle blower (26) of claim 4, comprising:
the active area (50);
the gas conduit (58) to deliver the hydrogen gas (42) received from the recycle blower (26) to the active area (50);
an aqueous solution conduit (56) to deliver an aqueous solution (40) to the active area (50); a two-phase fluid outlet conduit (60) to remove the hydrogen gas (42) and the aqueous solution (40) from the active area (50);
an oxygen-side (18) gas conduit (64) to deliver oxygen gas (46) received from an oxygen-side (18) recycle blower (36) to the active area (50);
an oxygen-side (18) aqueous solution conduit (62) to deliver the aqueous solution (40) to the active area (50), and
an oxygen-side (18) two-phase fluid outlet conduit (66) to remove the oxygen gas (46) and the aqueous solution (40) from the active area (50).

6. An electrolysis cell stack (14) comprising a plurality of interconnected electrolysis cells (12) of claim 5.

7. An electrolysis-mixed stack configuration (10), comprising:
a hydrogen-side (16) comprising the electrolysis stack (14) of claim 6, a pump (20) in fluid communication with the phase separator (22) in fluid communication with a heat exchanger (24) in fluid communication with the recycle blower (26); and
the oxygen-side (18) comprising the electrolysis stack (14) shared with the hydrogen-side (16), the pump (20) in fluid communication with an oxygen-side phase separator (32) in fluid communication with the heat exchanger (24) in fluid communication with the oxygen-side recycle blower (36);
wherein hydrogen (42) is generated from the hydrogen-side (16).

8. The electrolysis-separated stack configuration (10) of claim 7, further comprising a two-phase fluid (68) flow wherein the hydrogen gas (42) is introduced into the aqueous solution (40) prior to entry of the two-phase fluid (68) flow into the active area (50).

9. The electrolysis-separated stack configuration (10) of claim 8, wherein bubbles of the hydrogen gas (42) are introduced into the aqueous solution (40), or droplets of the aqueous solution (40) are introduced into the hydrogen gas (42), to form a two phase slug flow having alternating portions or regions of hydrogen gas (42) and aqueous solution (40) prior to the slug flow entry into the active area (50).

10. The gas conduit (58) of claim 1, wherein the electric current at the entry (52) of a first cell in a stack (14) is reduced to more closely balance the current at the exit (54) of a last cell in the stack (14) such that the potential difference between the entry (52) and exit (54) is less than 100 V.
